**Europäisches Patentamt**

**European Patent Office**

**Office européen des brevets**

(19)

(11) Veröffentlichungsnummer: **0 048 062**
**B1**

(12) # EUROPÄISCHE PATENTSCHRIFT

(45) Veröffentlichungstag der Patentschrift:
**11.07.84**

(51) Int. Cl.³: **G 11 B 17/02,** G 11 B 3/62

(21) Anmeldenummer: **81201004.9**

(22) Anmeldetag: **10.09.81**

(54) **Vorrichtung zum zentrierten Einspannen einer flexiblen Folie.**

(30) Priorität: **13.09.80 DE 3034633**

(43) Veröffentlichungstag der Anmeldung:
**24.03.82 Patentblatt 82/12**

(45) Bekanntmachung des Hinweises auf die Patenterteilung:
**11.07.84 Patentblatt 84/28**

(84) Benannte Vertragsstaaten:
**CH DE FR GB LI**

(56) Entgegenhaltungen:
**DE - A - 2 524 316**
**DE - B - 2 330 818**
**US - A - 4 208 682**

**IBM TECHNICAL DISCLOSURE BULLETIN, Band 22, Nr. 1, Juni 1979, New York K.D. RUSCH et al. "Flexible Disk Drive Having Precise Centering Mechanism" Seiten 293 bis 295**
**IBM TECHNICAL DISCLOSURE BULLETIN, Band 20, Nr. 6, November 1977 New York W.E. BEUCH et al. "Spider Collet for Flexible Magnetic Disks" Seiten 2376 bis 2377**

(73) Patentinhaber: **Philips Patentverwaltung GmbH, Billstrasse 80, D-2000 Hamburg 28 (DE)**

(84) Benannte Vertragsstaaten: **DE**

(73) Patentinhaber: **N.V. Philips' Gloeilampenfabrieken, Groenewoudseweg 1, NL-5621 BA Eindhoven (NL)**

(84) Benannte Vertragsstaaten: **CH FR GB LI**

(72) Erfinder: **Adamek, Manfred, Fliederweg 36, D-5242 Freusburg (DE)**
Erfinder: **Schattmann, Peter, Haubergstrasse 66, D-5900 Siegen 1 (DE)**

(74) Vertreter: **Hartmann, Heinrich, Dipl.-Ing. et al, Philips Patentverwaltung GmbH Billstrasse 80 Postfach 10 51 49, D-2000 Hamburg 28 (DE)**

## Beschreibung

Die Erfindung betrifft eine Vorrichtung zum zentrierten Einspannen einer flexiblen Folie, z.B. eines runden magnetischen Aufzeichnungsträgers, mit einer runden Öffnung auf einer die Folie in ihrer Ebene drehend antreibenden glockenförmigen Nabe mit einer zylindrischen Innenbohrung, deren Durchmesser um ein geringes Mass grösser ist als der Durchmesser der Folienöffnung, und einer Stirnfläche, auf der die Folie aufliegt, wobei ein dehnbarer Spreizdorn mit einem kegelförmigen und einem zylindrischen Teil durch die Folienöffnung in die Innenbohrung der Nabe einführbar ist und die Folie durch einen Flansch mit zur Stirnfläche der Nabe paralleler Andruckfläche auf dieser Stirnfläche angelegt hält und ein in den Spreizdorn einführbarer Spreizkegel den Spreizdorn nach dem Anlegen der Folie an die Stirnfläche der Nabe über mindestens ein federndes Element so aufweitet, dass der zylindrische Teil des Spreizdornes gegen die Wand der zylindrischen Innenbohrung der Nabe gedrückt wird und dabei die Öffnung der Folie auf den Durchmesser der Innenbohrung aufweitet.

Eine derartige Vorrichtung ist bekannt aus der DE-AS Nr. 2330818. Dabei hat der Spreizdorn eine kegelförmige Innenfläche, wobei der Öffnungswinkel dieses Innenkegels kleiner ist als der Öffnungswinkel der Mantelfläche des Spreizkegels. Dadurch wird beim Einführen des Spreizkegels der in radialer Richtung mehrfach geschlitzte Spreizdorn zunächst aufgeweitet, bis dessen zylindrischer Teil an der Innenbohrung der Nabe anliegt und die Folie auf deren Durchmesser aufweitet, und beim weiteren Einführen des Spreizkegels wird der Spreizdorn weiter in die Innenbohrung der Nabe hineingedrückt, wodurch der Flansch des Spreizkegels die Folie auf die Stirnfläche der Nabe presst.

Für die Übertragung des Drehmomentes auf die Folie ist eine bestimmte Mindestanpresskraft des Flansches des Spreizdornes notwendig, die im Idealfall parallel zur Achse der Nabe gerichtet sein müsste und die vom Spreizkegel mindestens auf den Spreizdorn übertragen werden muss. Da die Berührungsfläche zwischen Spreizdorn und Spreizkegel jedoch gegen deren Achse geneigt ist, entsteht bei der Kraftübertragung vom Spreizkegel auf den Spreizdorn auch eine radiale Komponente, die den Spreizdorn unterhalb des Flansches aufweitet und die von der Neigung der Berührungsfläche gegen die Achse und der notwendigen Anpresskraft für die Folie abhängt. Diese radiale Kraftkomponente führt zu einem zusätzlichen Aufweiten des Spreizdornes unterhalb des Flansches, wobei der obere Teil des Spreizdornes im Bereich des Flansches durch die notwendige Steifheit der Wandung des Spreizdornes nach innen zur Achse hin kippt und dabei die flexible Folie mit nach innen zieht. Dadurch entstehen sowohl Zentrierfehler wie auch undefinierte Ausbeulungen der flexiblen Folie, wobei der Zentrierfehler zu einer ungenauen Einstellung des Magnetkopfes auf die gewünschte Spur und damit zu einem starken Abfall des Lesesignals und die unkontrollierte Ausbeulung der flexiblen Folie zu einem zumindest zeitweisen Verlust des Kontaktes des Magnetkopfes mit der Folie führt.

Aufgabe der Erfindung ist es, eine Vorrichtung der eingangs genannten Art anzugeben, bei der der Spreizdorn auch nach dem Anlegen an die Innenbohrung die Öffnung der Folie beim weiteren Einführen des Spreizkegels und Aufbringen der Anpresskraft weitgehend fluchtend mit der zylindrischen Innenbohrung der Nabe hält und bei der gleichzeitig die Andruckfläche des Flansches des Spreizdornes parallel zur Stirnfläche der Nabe bleibt.

Diese Aufgabe wird erfindungsgemäss dadurch gelöst, dass die vom federnden Element im Bereich des Überganges zwischen kegelförmigem und zylinderförmigem Teil des Spreizdornes auf diesen übertragbare Kraft grösser als die zur Aufweitung der Öffnung der Folie, aber kleiner als die für eine wesentliche elastische Verformung des Spreizdornes ausserhalb der bei der Stirnfläche endenden zylindrischen Innenbohrung der Nabe notwendige Kraft ist, und dass der Spreizkegel einen Kegelflansch aufweist, der den Flansch des Spreizdornes auf die Folie und damit diese gleichmässig auf die Stirnfläche der Nabe mit einer zur Übertragung des Drehmomentes für den Antrieb der Folie ausreichenden Kraft presst.

Hierdurch wird zweierlei erreicht. Zum einen wird durch das federnde Element verhindert, dass sich der Spreizkonus infolge toleranzbedingter Massabweichungen unkontrolliert verbiegt, und zum anderen wird durch den Kegelflansch des Spreizkegels die Anpresskraft für die Übertragung des Drehmomentes von der Nabe auf die Folie, die wesentlich grösser ist als die zum Aufweiten notwendige Kraft, direkt auf den Flansch des Spreizkonus übertragen, so dass sich dieser auch infolge der Anpresskraft nicht unkontrolliert verbiegen kann. Dadurch bleibt die Zentrierung der Folie auch bis nach dem Aufbringen der Anpresskraft sehr genau erhalten.

Für die Ausbildung des federnden Elementes bestehen verschiedene Möglichkeiten. Nach einer ersten Ausgestaltung der Erfindung ist das federnde Element ein elastischer Ring zwischen dem Mantel des Kegels und der Innenfläche des Spreizdornes. Dieser elastische Ring kann ein Gummiring sein, der in einer entsprechenden Ausnehmung des Spreizkegels oder besser noch wegen der definierten Stelle der Krafteinleitung in eine Ausnehmung des Spreizdornes eingelegt sein kann. Das federnde Element kann auch ein runder Drahtring sein, der sich auf Vorsprüngen an der Innenseite des Spreizdornes und an radial dazu versetzten Vorsprüngen des Spreizkegels abstützt.

Für eine andere Ausführungsform der federnden Elemente ist eine weitere Ausgestaltung der Erfindung dadurch gekennzeichnet, dass mehrere federnde Elemente in Form von blattförmigen Elementen vorgesehen sind und in jedem Segment des mit Längsschlitzen versehenen Spreizdornes ein blattförmiges Element derart angeordnet ist, dass alle blattförmigen Elemente einen mit durchgehenden Längsschlitzen versehenen Zylinder bzw. Kegel innerhalb des Spreizdornes bilden. Hiermit lässt sich eine besonders gute radiale Kraftübertragung mit sehr geringen axialen Komponenten erreichen. Diese Ausführungsform lässt sich auch leicht herstellen, wenn die blattfederförmigen Elemente mit dem Spreizdorn einen Teil bilden.

Durch das Aufweiten der Öffnung der Folie ergeben sich elastische Verformungen, wodurch die Folie sich zumindest im Bereich der Einspannvorrichtung ausbeult. Diese Ausbeulungen sind bei der erfindungsgemässen Vorrichtung im allgemeinen bei normalen Toleranzen nur gering. In besonderen Fällen können diese Ausbeulungen aber stärker sein und die Folie über einen grösseren Bereich wellenförmig elastisch verformen. Diese wellenförmige Verformung dreht sich also mit und kann beim Vorbeilaufen an einem magnetischen Lesekopf dazu führen, dass dieser vorübergehend nicht mehr ausreichenden Kontakt mit der Folie hat, so dass das Lesesignal verändert wird. Um daher in allen Fällen die Folie im Bereich des Lesekopfes möglichst glatt zu halten, ist eine weitere Ausgestaltung der Erfindung dadurch gekennzeichnet, dass die Stirnfläche der Nabe einen Kegel mit einem Öffnungswinkel bildet, der nur wenig von 180° abweicht. Durch diese kegelförmige Stirnfläche wird erreicht, dass sich die Folie im Bereich der Einspannvorrichtung beim Aufweiten ringsherum gleichmässig ausbeult, während der äussere Bereich der Folie im Gebiet der magnetischen Abtastung praktisch völlig glatt bleibt und lediglich abhängig von dem Ausmass der Aufweitung „hochsteigt", wenn die Öffnung des Kegels der Stirnfläche nach oben zeigt. Die durch die Kegelform gebildete Neigung der Stirnfläche gegenüber der entspannten Folie, d.h. gegenüber einer Ebene senkrecht zur Achse, braucht nur gering zu sein, um auch bei grösseren Aufweitungen eine gleichmässige Ausbeulung der Folie im Bereich der Einspannvorrichtung zu erzielen, so dass eine weitere Ausgestaltung der Erfindung bezüglich des durch die Stirnfläche der Nabe gebildeten Kegels dadurch gekennzeichnet ist, dass der Öffnungswinkel etwa 178° beträgt.

Ausführungsbeispiele der Erfindung werden nachfolgend anhand der Zeichnung näher erläutert. Es zeigen:

Fig. 1 die Verformung eines Spreizdornes gemäss dem Stand der Technik bei völlig eingeführtem Spreizkegel,

Fig. 2 und Fig. 3 zwei Querschnitte einer erfindungsgemässen Vorrichtung bei teilweise und bei ganz eingeführtem Spreizkegel und kegeliger Stirnfläche,

Fig. 4 eine andere Ausführung des federnden Elements.

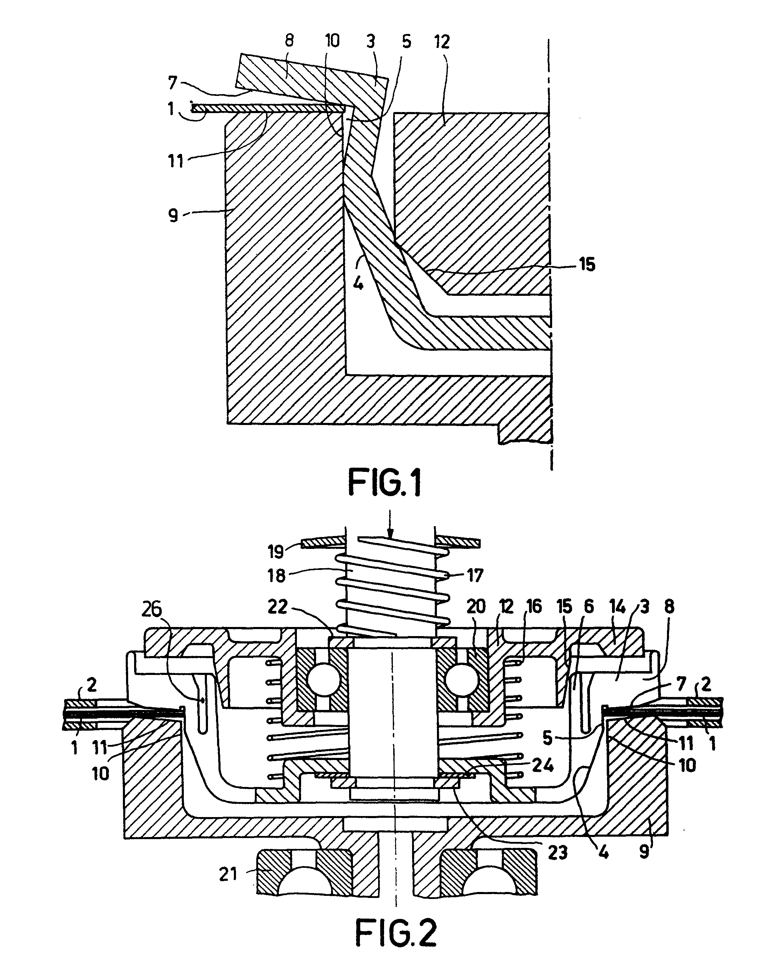

In Fig. 1 ist eine Einspannvorrichtung nach dem Stand der Technik schematisch zur Hälfte angebeudet, d.h. bis zur Mittelachse. Die Nabe 9, die angetrieben wird und die ein Drehmoment auf die flexible Folie 1 übertragen soll, weist eine zylindrische Innenfläche 10 und eine plane Stirnfläche 11 auf, auf der die Folie aufliegt. Der Spreizdorn 3, der bei der eingangs genannten DE-AS Nr. 2330818 mit Längsschlitzen versehen ist, damit er leichter aufweitbar ist, hat einen Flansch 8 und einen zylinderförmigen Teil 5 und einen kegelförmigen Teil 4. Die Innenseite des Spreizdornes ist durch die gleichmässige Wandstärke ebenfalls teilweise kegelförmig, und in diesen Teil wird ein Spreizkegel 12 eingedrückt, der zunächst den Spreizdorn 3 aufweitet. Beim stärkeren Einpressen des Spreizkegels 12 wird der Spreizdorn 3 weiter in die Innenbohrung der Nabe 9 hineingedrückt, so dass die Unterseite 7 des Flansches 8 die Folie 1 auf die Stirnfläche 11 der Nabe 9 drückt. Beim Eindrücken des Spreizkegels 12 wird auf die Wand des Spreizdornes 3 aber nicht nur eine axiale Kraft, sondern auch eine radiale Kraftkomponente ausgeübt, die die Wandung des Spreizdornes 3 im kegelförmigen Bereich 4 nach aussen drückt und durch eine Hebelwirkung, bei der der Drehpunkt des Hebels der an der Innenfläche 10 der Innenbohrung der Nabe 9 anliegende Übergang zwischen dem zylindrischen Teil 5 und dem kegelförmigen Teil 4 des Spreizdornes 3 ist, den Flansch 8 des Spreizdornes 3 nach innen zieht. Dadurch wird die Folie 1 ebenfalls nach innen gezogen, da der Reibungskoeffizient zwischen Folie 1 und dem Flansch 8 grösser ist als zwischen der Folie und der Nabe 9. Ausserdem kippt gleichzeitig der Flansch 8 aussen hoch, so dass die Anpressfläche des Flansches 7 nicht mehr vollständig auf der Folie aufliegt. Diese Verhältnisse sind in der Fig. 1 nicht massstäblich, sondern stark übertrieben angegeben, jedoch entstehen durch die tatsächlich nur geringen Verschiebungen im praktischen Betrieb doch merkliche Rundlauffehler und noch stärker unkontrollierte Ausbeulungen der Folie, die zu einem unzureichenden Kontakt des Magnetkopfes mit der Folienoberfläche sowie zu einer Abweichung des Magnetkopfes von der gewünschten Spur auf der Folie führen, so dass erhebliche Veränderungen des Lesesignals des Magnetkopfes entstehen.

Diese nachteilige Verschiebung des Flansches 8 kann auch nicht dadurch vermieden werden, dass der Angriffspunkt des Spreizkegels 12 an den Spreizdorn 3 an eine Stelle verlegt wird, die dem zylindrischen Teil 5 gegenüberliegt, denn allein durch einen beispielsweise toleranzbedingt grossen axialen Druck auf den Spreizdorn 3 wird der Flansch 8 über die Kante an der Innenfläche 10 und der Stirnfläche 11 hochgekippt, wie in Fig. 1 schematisch dargestellt ist, so dass die über den grössten Teil der Stirnfläche 11 geführte Einspannung der Folie 1 nicht mehr gewährleistet ist und undefinierte Ausbeulungen in der Folie entstehen.

Bei der in Fig. 2 dargestellten erfindungsgemässen Vorrichtung ist der Spreizdorn 3 bereits durch die Öffnung der Folie 1 in die Innenbohrung der Nabe 9 eingeführt, während die kegelige Mantelfläche 15 des Spreizkegels 12 noch gerade keinen Kontakt mit dem Spreizdorn 3 hat und diesen somit noch nicht aufgeweitet hat. Der Innenrand der Öffnung der Folie 1 ragt somit über die Innenfläche 10 der Nabe 9 hinaus, und der zylindrische Teil 5 des Spreizdornes 3 liegt noch nicht an dieser Fläche an. Ferner ist die Stirnfläche 11 der Nabe 9 nicht senkrecht zur Drehachse ausgerichtet, sondern bildet einen nach oben geöffneten Kegel, und die Unterfläche 7 des Flansches 8 des Spreizdornes 3 bildet einen dazu genau passenden Kegel.

Die Nabe 9 wird von unten über eine Welle angetrieben, die in dem Kugellager 21 gelagert ist. Der Spreizdorn 3 ist drehbar und axial verschiebbar auf einer Welle 18 angeordnet und gegen Herabrutschen von dieser Welle durch eine Scheibe 24 und einen Sicherungsring 23 geschützt. Der Spreizkegel 12 ist über ein Kugellager 20 auf der Welle 18 angebracht, wobei eine oben durch den Pfeil angedeutete, über die Scheibe 19 auf die Feder 17 ausgeübte axiale Kraft über den Ring 22 und das Kugellager 20 auf den Spreizkegel 12 übertragen wird. Zwischen Spreizdorn 3 und Spreizkegel 12 ist eine relativ weiche Feder 16 angeordnet, die ein Herausgleiten der Mantelfläche 15 des Spreizkegels 12 aus dem Spreizdorn 3 unterstützen soll.

Der Spreizdorn 3 ist mit blattfederförmigen Ansätzen 6 versehen, die im Bereich des Übergangs zwischen zylinderförmigem Teil 5 und kegelförmigem Teil 4 des Spreizdornes in diesen übergehen. Sie können auch noch etwas höher, jedoch unterhalb der Ebene der Folie angesetzt sein.

Wenn von der Stellung gemäss Fig. 2 aus dem Spreizkegel 12 weiter in den Spreizdorn 3 hineingedrückt wird, werden die Ansätze 6 nach aussen gedrückt, und diese drücken dadurch die einzelnen Segmente des mit radialen Längsschlitzen 26 versehenen Spreizdornes auseinander, so dass dieser aufgeweitet wird und damit auch die Öffnung der Folie 1. Die radialen Längsschlitze 26 verlaufen in axialer Richtung durch den ganzen Spreizdorn 3. Durch eine geringe Kraft infolge der Reibung des Kegelmantels 15 an den Ansätzen 6 und durch die Feder 16 wird der Flansch 8 des Spreizdornes 3 mit der Unterseite 7 auf die Folie gedrückt und legt diese an die Stirnfläche 11 der Nabe 9 an.

Wenn der zylindrische Teil 5 des Spreizdornes 3 an der Innenfläche 10 anliegt, ist eine weitere Aufspreizung nicht möglich, und beim weiteren Hineindrücken des Spreizkegels 12 werden lediglich die Ansätze 6 stärker elastisch verformt, wodurch die Kraft, mit der der zylindrische Teil 5 des Spreizdornes 3 gegen die Innenfläche 10 gedrückt wird, nur wenig zunimmt und keine plastische Verformung zulässt. Gleichzeitig liegt der Flansch 8 des Spreizdornes 3 über der Nabe 9 auf der Folie 1 auf, die dabei von dem zylindrischen Teil 5 aufgeweitet wird. Der Innenrand der Öffnung der Folie 1 bleibt genau fluchtend mit der Innenfläche 10 der Nabe 9.

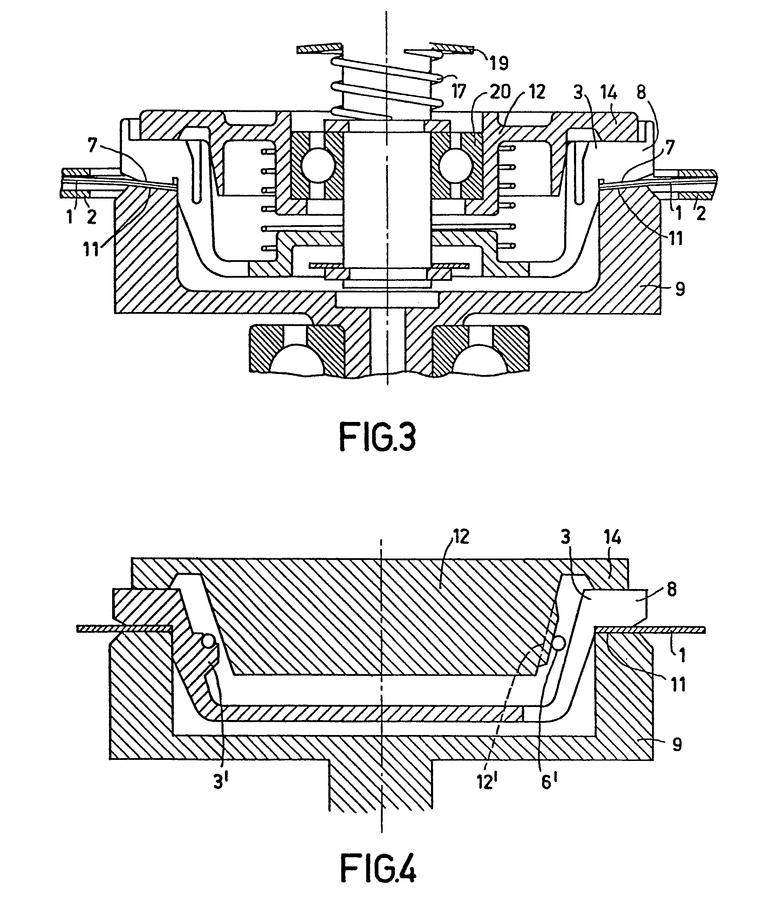

Wenn der Spreizkonus 12 dann noch weiter hineingedrückt wird, wird schliesslich der in Fig. 3 dargestellte Zustand erreicht. Dabei liegt der Kegelflansch 14 des Spreizkegels 12 auf dem Flansch 8 des Spreizdornes 3 auf und überträgt auf diesen praktisch die gesamte Kraft, die auf die Scheibe 19 und von dieser über die Feder 17 und das Kugellager 20 auf den Spreizkegel 12 wirkt. Mit dieser gleichen Kraft presst auch die Unterseite 7 des Flansches 8 die Folie 1 auf die Stirnfläche 11 der Nabe 9, ohne dass dabei irgendwelche Teile des Spreizdornes 3 gebogen oder auf Scherung beansprucht werden. Dadurch tritt also keine Verformung ein, so dass die Unterseite 7 des Flansches 8 praktisch stets mit der ganzen Fläche die Folie 1 auf die Stirnfläche 11 drückt. Die dabei aufgebrachte Kraft muss mindestens ausreichen, um das für die Drehung der Folie 1 notwendige Drehmoment zu übertragen. Dabei ist zu berücksichtigen, dass diese Folie in einer Hülle 2 liegt und an deren Innenwand schleift und somit gebremst wird. Andererseits ist es jedoch ohne Schwierigkeiten, d.h. ohne unkontrollierte Verformungen möglich, die von dem Kegelflansch 14 über den Flansch 8 auf die Folie 1 übertragene Kraft wesentlich zu erhöhen, um auch in Ausnahmefällen schwerer in ihrer Hülle frei bewegliche Folien 1 sicher mitzunehmen.

Durch die kegelförmige Oberfläche der Stirfläche 11 und der Unterseite 7 des Flansches 8 liegt die Folie in sich nicht plan, sondern sie ist vom Einspannbereich aus etwas schräg nach oben gerichtet. Dadurch wird die durch das Aufweiten der Öffnung der Folie in diese übertragene Spannung gleichmässig und definiert verteilt, wobei abhängig vom Mass der Aufweitung die Aufwölbung und damit der Übergang in den ebenen Bereich bei der Folie 1 weiter nach aussen wandert. Bei einem Öffnungswinkel des Kegels, der von der Stirnfläche 11 als Mantel und von der Fläche senkrecht zur Drehachse als Grundfläche gebildet wird, von etwa 178°, d.h. bei einer Neigung der Stirnfläche 11 um 1° gegenüber der planen Fläche bleibt die Ausbeulung in einem Bereich zwischen der Einspannstelle und dem Bereich, der vom Magnetkopf üblicherweise überstrichen wird, äusserst gering. In dem Bereich der Abtastung durch den Magnetkopf ist demgegenüber die Folie 1 immer plan und ohne Wellen und kann somit sicher vom Magnetkopf abgetastet werden. Auch der zentrische Lauf der Folie ist bei praktisch allen Toleranzen gesichert. Selbst bei einer Folie mit minimalen Durchmesser der Öffnung und einer Nabe mit maximalem Durchmesser der Innenbohrung, die die extremste mögliche Aufweitung der Öffnung der Folie bewirkt, wird der aufgewölbte Teil der Folie 1 nur sehr begrenzt sein und nicht in den Bereich der magnetischen Aufzeichnung reichen.

Bei dem vorstehend beschriebenen Ausführungsbeispiel wird das federnde Element des Spreizdornes durch eine Anzahl blattfederartiger Ansätze 6 gebildet, die mit dem Spreizdorn einen Teil bilden und somit leicht aus Kunststoff hergestellt werden können, wobei sich eine einfache Montage ergibt. Eine andere Realisierung des federnden Elementes ist in Fig. 4 angedeutet, wo dieses aus einem Drahtring 6' gebildet wird, der auf Vorsprüngen 3' des mit einer ungeraden Anzahl Längsschlitzen versehenen Spreizdornes aufliegt. Der Spreizkegel 12 weist ebenfalls Vorsprünge 12' auf, die gegenüber den Vorsprüngen 3' des Spreizdornes 3 auf dem Umfang versetzt sind. Dadurch kann der Drahtring 6' zwischen den Vorsprüngen 3' bis nahezu an die Innenwand des Spreizdornes ausgelenkt werden, ohne dass hierbei unkontrollierte radiale Kräfte auftreten.

Der Ring 6' kann auch als Gummiring ausgebildet sein, wobei der Vorsprung 3' des Spreizdornes 3 auf dem ganzen Umfang umlaufend ausgebildet ist, jedoch etwas kleiner, so dass der Ring nach innen frei liegt. Der Spreizkegel 12 braucht dann keine Vorsprünge aufzuweisen. Der Gummiring wirkt dann als federndes Element zwischen dem Ansatz 3' des Spreizdornes und der Kegelwand des Spreizkegels 12.

Gemeinsam ist allen Ausführungen des federnden Elementes, dass dieses verschiedene Masstoleranzen und ggf. auch Massänderungen durch thermische Ausdehnung aufnehmen kann, wobei die auf den Spreizdorn 3 in radiale Richtung aufgebrachte Kraft in jedem Falle nur gering ist, während die Kraft für die Übertragung des Drehmomentes von der Stirnfläche 11 der Nabe 9 auf die Folie 1 durch den Spreizkegel 12 über einen Flansch 14 direkt in einer Richtung aufgebracht wird, die im wesentlichen senkrecht zur Stirnfläche 11 steht. Dadurch sind unerwünschte Verformungen des Spreizdornes 3 ausgeschlossen.

## Patentansprüche

1. Vorrichtung zum zentrierten Einspannen einer flexiblen Folie, z.B. eines runden magnetischen Aufzeichnungsträgers, mit einer runden Öffnung auf einer die Folie in ihrer Ebene drehend antreibenden glockenförmigen Nabe mit einer zylindrischen Innenbohrung deren Durchmesser um ein geringes Mass grösser ist als der Durchmesser der Folienöffnung, und einer Stirnfläche, auf der die Folie aufliegt, wobei ein in radialer Richtung dehnbarer Spreizdorn mit einem kegelförmigen und einem zylindrischen Teil durch die Folienöffnung in die Innenbohrung der Nabe einführbar ist und die Folie durch einen Flansch mit zur Stirnfläche der Nabe paralleler Andruckfläche auf dieser Stirnfläche angelegt hält und ein in den Spreizdorn einführbarer Spreizkegel den Spreizdorn nach dem Anlegen der Folie an die Stirnfläche der Nabe über mindestens ein federndes Element so aufweitet, dass der zylindrische Teil des Spreizdorns gegen die Wand der zylindrischen Innenbohrung der Nabe gedrückt wird und dabei die Öffnung der Folie auf den Durchmesser der Innenbohrung aufweitet, dadurch gekennzeichnet, dass die vom federnden Element im Bereich des Übergangs zwischen kegelförmigem und zylinderförmigem Teil des Spreizdorns auf diesen übertragbare Kraft grösser als die zur Aufweitung der Öffnung der Folie, aber kleiner als die für eine wesentliche elastiche Verformung des Spreizdorns ausserhalb der bei der Stirnfläche endenden zylindrischen Innenbohrung der Nabe notwendige Kraft ist, und dass der Spreizkegel einen Kegelflansch aufweist, der den Flansch des Spreizdorns auf die Folie und damit diese gleichmässig auf die Stirnfläche der Nabe mit einer zur Übertragung des Drehmomentes für den Antrieb der Folie ausreichenden Kraft presst.

2. Vorrichtung nach Anspruch 1, dadurch gekennzeichnet, dass das federnde Element ein elastischer Ring zwischen dem Mantel des Spreizkegels und der Innenfläche des Spreizdornes ist.

3. Vorrichtung nach Anspruch 1, dadurch gekennzeichnet dass mehrere federnde Elemente in Form von blattfederförmigen Elementen vorgesehen sind und in jedem Segment des mit radialen Längsschlitzen versehenen Spreizdorns ein blattfederförmiges Element derart angeordnet ist, dass alle blattfederförmigen Elemente einen mit in axialer Richtung durchgehenden Längsschlitzen versehenen Zylinder bzw. Kegel innerhalb des Spreizdornes bilden.

4. Vorrichtung nach Anspruch 3, dadurch gekennzeichnet, dass die blattfederförmigen Element mit dem Spreizdorn einen Teil bilden.

5. Vorrichtung nach Anspruch 1 oder einem der folgenden, dadurch gekennzeichnet, dass die Stirnfläche der Nabe einen Kegel mit einem Öffnungswinkel bildet, der nur wenig von 180° abweicht.

6. Vorrichtung nach Anspruch 5, dadurch gekennzeichnet, dass der Öffnungswinkel etwa 178° beträgt.

## Claims

1. A device for centring and clamping a flexible foil with a round opening, for example, a round magnetic record carrier, on a bell-shaped hub which rotates the foil in the plane of its major surface, which hub has a cylindrical inner bore, whose diameter is slightly greater than the diameter of the opening in the foil, and an end surface on which the foil is positioned, the opening in the foil permitting the insertion of an expansible mandril having a conical portion and a cylindrical portion into the inner bore of the hub to keep the foil positioned on the end surface of the hub by means of a flange having a contact surface which is parallel to said end surface, and an expander cone is provided which, after the foil has been positioned on the end surface of the hub can be inserted into the expanding mandril to expand the mandril *via* at least one resilient element so that the cylindrical portion of the mandril is urged against the wall of the cylindrical inner bore the hub, thereby enlarging the opening in the foil the diameter of the inner bore, characterized in that the force that can be transmitted to the expansible mandril *via* the resilient element at the location of the transition between the conical and cylindrical portions of said mandril is greater than the force required for widening the opening in the foil but smaller than the force necessary for a substantial elastic deformation of the expansible mandril beyond the cylindrical inner bore of the hub, which bore terminates at the end surface, and in that the expander cone comprises a flange which presses the flange of the expansible mandril onto the foil, thereby pressing said foil uniformly onto the end surface of the hub with a force which is adequate to transmit the driving torque for the foil.

2. A device as claimed in Claim 1, characterized in that the resilient element is an elastic between the circumferential surface of the cone and the inner surface of the expansible mandril.

3. A device as claimed in Claim 1, characterized in that there is provided a plurality of resilient elements in the form of leaf springs and a leaf spring is arranged in each segment of the expansible mandril, the mandril being formed with axial slits in such a way that the plurality of leaf springs constitutes a cylinder or cone with continuous axial slits within the expansible mandril.

4. A device as claimed in Claim 3, characterized in that the leaf springs are integral with the expansible mandril.

5. A device as claimed in any of the preceding Claims, characterized in that the end surface of the hub forms part of a conical surface having a generating angle which differs only slightly from 180°.

6. A device as claimed in Claim 5, characterized in that the generating angle is approximately 178°.

## Revendications

1. Dispositif pour centrer et serrer un disque souple, par exemple un support d'enregistrement magnétique rond présentant une ouverture ronde sur un moyeu en forme de cloche entraînant le disque en rotation dans son propre plan et comportant un alésage intérieur cylindrique dont le diamètre est légèrement supérieur au diamètre de l'ouverture du disque et une face d'about sur laquelle le disque est posé, un mandrin expansible dans le sens radial qui comporte une partie conique et une partie cylindrique pouvant être introduit à travers l'ouverture du disque dans l'alésage intérieur du moyeu et pouvant maintenir le disque posé sur la face d'about du moyeu par une bride présentant une face de pression parallèle à cette face d'about et un cône d'expansion pouvant être introduit dans le mandrin expansible élargissant le mandrin expansible après l'application du disque sur la face d'about du moyeu par l'intermédiaire d'au moins un élément élastique de telle sorte que la partie cylindrique du mandrin expansible soit pressée contre la paroi de l'alésage intérieur cylindrique du moyeu et élargisse ainsi l'ouverture du disque jusqu'au diamètre de l'alésage intérieur, caractérisé en ce que la force pouvant être transmise au mandrin par l'élément élastique dans la zone de la transition entre la partie conique et la partie cylindrique du mandrin expansible est supérieure à celle nécessaire pour élargir l'ouverture du disque mais inférieure à celle nécessaire pour provoquer une déformation en substance élastique du mandrin expansible à l'extérieur de l'alésage intérieur cylindrique du moyeu qui se termine à la face d'about et le cône d'expansion présente une bride conique qui presse la bride du mandrin expansible sur le disque et ainsi ce disque de manière uniforme sur la face d'about du moyeu à l'aide d'une force suffisante pour transmettre le couple de rotation pour l'entraînement du disque.

2. Dispositif suivant la revendication 1, caractérisé en ce que l'élément élastique est un anneau élastique entre la surface latérale du cône d'expansion et la surface interne du mandrin expansible.

3. Dispositif suivant la revendication 1, caractérisé en ce que plusieurs éléments élastiques comprenant des éléments en forme de lames de ressort sont prévus et un élément en forme de lame est monté dans chaque segment du mandrin expansible présentant des fentes longitudinales d'une manière telle que tous les éléments en forme de lames forment un cylindre ou un cône pourvu de fentes longitudinales de traversée à l'intérieur du mandrin expansible.

4. Dispositif suivant la revendication 3, caractérisé en ce que les éléments en forme de lames de ressort font partie intégrante du mandrin expansible.

5. Dispositif suivant la revendication 1 ou l'une quelconque des revendications suivantes, caractérisé en ce que la surface d'about du moyeu forme un cône présentant un angle d'ouverture qui ne diffère que légèrement de 180°.

6. Dispositif suivant la revendication 5, caractérisé en ce que l'angle d'ouverture est d'environ 178°.

FIG.1

FIG.2

FIG.3

FIG.4